# EUROPÄISCHE PATENTSCHRIFT

(11) **EP 2 213 888 B1**
(45) Veröffentlichungstag und Bekanntmachung des Hinweises auf die Patenterteilung: **28.03.2018**
(21) Anmeldenummer: 10401005.3
(22) Anmeldetag: 14.01.2010
(51) Int. Cl.: F16B 25/00, F16B 5/02, E04F 13/08

(54) **Dämmstoffhalter**
Insulation holder
Support pour matière isolante

(30) Priorität: 30.01.2009 DE 102009006769
(43) Veröffentlichungstag der Anmeldung: 04.08.2010
(73) Patentinhaber: fischerwerke GmbH & Co. KG, 72178 Waldachtal (DE)
(72) Erfinder: Renz, Jürgen, 72202 Nagold (DE)

(56) Entgegenhaltungen:
- DE-A1-102004 062 151
- DE-U1-202004 021 406

## Beschreibung

Die Erfindung betrifft einen Dämmstoffhalter mit den Merkmalen des Oberbegriffs des Anspruchs 1. Dämmstoffhalter werden zur Befestigung von Dämmstoffplatten an einem Befestigungsgrund wie beispielsweise einer Gebäudewand verwendet. Die Dämmstoffplatten bestehen üblicherweise aus geschäumtem Kunststoff. Man spricht auch von Wärmedämmverbundsystemen (WDVS).

Es sind Dämmstoffhalter bekannt, die einen Halteteller mit einem Mittelloch und einen Dübel, der durch einen Hohlschaft mit dem Halteteller verbunden ist, aufweisen. Die Dämmstoffhalter sind üblicherweise einstückig durch Spritzgießen aus Kunststoff hergestellt. Der Dämmstoffhalter wird durch ein Loch in der Dämmstoffplatte in ein Loch im Befestigungsgrund gesetzt und durch Einschlagen eines Spreizstifts oder Eindrehen einer Spreizschraube im Befestigungsgrund verankert. Der Halteteller liegt auf einer Außenseite der Dämmstoffplatte auf, vorzugsweise wird er etwas eingedrückt, damit er nicht über die Außenseite der Dämmstoffplatte übersteht, und hält die Dämmstoffplatte am Befestigungsgrund.

In jüngerer Zeit ist eine andere Kategorie von Dämmstoffhaltern bekannt geworden, die keinen Halteteller, sondern ein Dämmstoffgewinde zur Befestigung der Dämmstoffplatte aufweisen. Das Dämmstoffgewinde weist üblicherweise die Form eines steifen, wendelflächenförmig umlaufenden Bandes auf, es lässt sich in eine Dämmstoffplatte einschrauben, wobei es sich ein Gegengewinde schneidet. Um eine ausreichende Tragfestigkeit in der Dämmstoffplatte zu erzielen, muss das Dämmstoffgewinde ausreichend großflächig sein, damit eine Kraftübertragung zwischen der Dämmstoffplatte und dem Dämmstoffgewinde auf eine ausreichend große Fläche verteilt wird, die ein Ausreißen der Dämmstoffplatte im Bereich des Dämmstoffgewindes vermeidet. Ein Außendurchmesser des Dämmstoffgewindes liegt beispielsweise beim 3-4fachen eines Kerndurchmessers des Dämmstoffgewindes, als unterer Grenzwert kann ein etwa doppelt so großer Außendurchmesser des Dämmstoffgewindes wie der Kerndurchmesser angesehen werden. In absoluten Zahlen kann der Außendurchmesser des Dämmstoffgewindes etwa 60 mm, 70 mm oder mehr betragen bei einem Kerndurchmesser zwischen etwa 15 mm bis 20 mm. Ein Gewindegang des wendelflächenförmigen Dämmstoffgewindes ist üblicherweise dünn im Verhältnis zum Gewindeaußendurchmesser und auch im Verhältnis zur Höhe des Gewindegangs, also der radialen Erstreckung vom Gewindekern bis zum Außendurchmesser. Die Dicke des Gewindegangs beträgt üblicherweise wenige Millimeter, weswegen das Dämmstoffgewinde auch als bandförmig bezeichnet werden kann. Der Begriff ?Dämmstoffgewinde" ist nicht ausschließlich anhand seiner Form und Abmessungen zu bestimmen, sondern im Wesentlichen (auch) anhand seiner Funktion, in eine Dämmstoffplatte einschraubbar zu sein, wobei sich das Dämmstoffgewinde das Gegengewinde vorzugsweise selbst schneidet, und eine ausreichende Tragfestigkeit in der Dämmstoffplatte aufzuweisen, um die Dämmstoffplatte gegen eine sie vom Befestigungsgrund abhebenden Kraft zu halten ohne Auszureißen.

Beispielhaft für Dämmstoffhalter mit Dämmstoffgewinden wird auf die beiden Offenlegungsschriften DE 10 2004 062 151 A1 und DE 10 2005 000 147 A1 verwiesen. Beim Dämmstoffhalter der erstgenannten Offenlegungsschrift ist das Dämmstoffgewinde über einen Schaft dreh- und axialfest mit einem Holzschraubengewinde verbunden, das zur Verankerung in einem Befestigungsgrund in einen vom Dämmstoffhalter separaten Dübel einschraubbar ist. Der Dämmstoffhalter der zweitgenannten Offenlegungsschrift weist einen Hohlschaft auf, der das Dämmstoffgewinde einstückig mit einem Dübel verbindet. Ein Nachteil des erstgenannten Dämmstoffhalters ist darin zu sehen, dass der Dübel separat gesetzt werden muss, wogegen beim zweitgenannten Dämmstoffhalter der Dübel drehend in das Loch im Befestigungsgrund eingebracht wird, weil das Einbringen des Dübels in den Befestigungsgrund wegen der Einstückigkeit des Dübels mit dem Dämmstoffgewinde gleichzeitig mit dem Einschrauben des Dämmstoffgewindes in die Dämmstoffplatte erfolgt.

Ergänzend wird auf die europäische Patentanmeldung EP 0 811 773 A2 verwiesen, die ebenfalls einen Dämmstoffhalter mit einem Dämmstoffgewinde zum Einschrauben in eine Dämmstoffplatte offenbart. Allerdings ist dieser Dämmstoffhalter zur Abstandsmontage der Dämmstoffplatte vorgesehen, er wird so weit in die Dämmstoffplatte eingeschraubt, dass sein Schaft, der eine Verlängerung des Gewindekerns bildet, auf einer dem Befestigungsgrund zugewandten Seite aus der Dämmstoffplatte vorsteht, so dass die Dämmstoffplatte in Abstand vom Befestigungsgrund gehalten ist. Die Befestigung erfolgt mittels einer separaten Schraube, die durch ein Axialloch im Gewindekern und Schaft durchgesteckt und in den Befestigungsgrund eingeschraubt wird. Durch Drehen des Dämmstoffhalters in der Dämmstoffplatte lässt sich der Abstand der Dämmstoffplatte vom Befestigungsgrund einstellen.

Aufgabe der Erfindung ist, einen Dämmstoffhalter mit einem Dämmstoffgewinde der vorstehend erläuterten Art vorzuschlagen, dessen Dübel beim Einschrauben des Dämmstoffgewindes in eine Dämmstoffplatte nicht (zwingend) mitdreht.

Diese Aufgabe wird erfindungsgemäß durch die Merkmale des Anspruchs 1 gelöst. Das Dämmstoffgewinde des erfindungsgemäßen Dämmstoffhalters ist gegenüber dem Dübel drehbar. Dadurch kann das Dämmstoffgewinde in eine Dämmstoffplatte eingeschraubt werden, ohne dass der Dübel im Befestigungsgrund mitdreht und dabei unnötig verschleißt. Des weiteren weist der erfindungsgemäße Dämmstoffhalter einen Verkürzungsbereich zwischen dem Dämmstoffgewinde und dem Dübel auf, so dass der Abstand zwischen dem Dämmstoffgewinde und dem Dübel verkleinert werden kann. Dadurch kann sich das Dämmstoffgewinde beim Einschrauben in die Dämmstoffplatte axial bewegen, wogegen sich der Dübel im Befestigungsgrund nicht axial bewegt (wenn er seine vorgesehene Setztiefe erreicht hat).

Der erfindungsgemäße Dämmstoffhalter weist eine Drehverbindung auf, die das Dämmstoffgewinde drehbar mit dem Dübel verbindet. Die Drehverbindung ist erfindungsgemäß axialfest, eine Axialbeweglichkeit des Dämmstoffgewindes gegenüber dem Dübel ist durch den Verkürzungsbereich des Dämmstoffhalters zwischen dem Dämmstoffgewinde und dem Dübel gegeben.

Eine Ausgestaltung der Erfindung sieht eine Schraube vor, die drehfest mit dem Dämmstoffgewinde ist. Die Schraube kann axial gegenüber dem Dämmstoffgewinde beweglich oder axialfest mit dem Dämmstoffgewinde sein. Durch einen Drehantrieb des Dämmstoffgewindes zum Einschrauben in die Dämmstoffplatte wird die mit dem Dämmstoffgewinde drehfeste Schraube ebenfalls drehend angetrieben und in den Dübel des Dämmstoffhalters eingeschraubt. Die Schraube spreizt den Dübel auf und verankert ihn und damit den Dämmstoffhalter im Befestigungsgrund. Das Einschrauben des Dämmstoffgewindes in die Dämmstoffplatte und das Einschrauben der Schraube in den Dübel des Dämmstoffhalters erfolgen in einem Arbeitsgang.

Vorzugsweise ist eine Steigung des Dämmstoffgewindes nicht größer als eine Steigung eines Gewindes der Schraube. Durch eine gleiche Gewindesteigung des Dämmstoffgewindes und des Gewindes der Schraube bewegt sich die Schraube beim Einschrauben in den Dübel axial so schnell wie das Dämmstoffgewinde beim Einschrauben in die Dämmstoffplatte, so dass die Dämmstoffplatte sich nicht in Bezug auf den Befestigungsgrund bewegt, sondern in Anlage am Befestigungsgrund bleibt. Wird die Steigung des Gewindes der Schraube größer gewählt als die Steigung des Dämmstoffgewindes, bewegt sich die Schraube beim Einschrauben in den Dübel axial schneller als das Dämmstoffgewinde beim Einschrauben in die Dämmstoffplatte, wodurch die Dämmstoffplatte gegen den Befestigungsgrund gespannt wird.

Der Verkürzungsbereich des Dämmstoffhalters kann beispielsweise teleskopierbar ausgeführt sein, womit zugleich auch die Drehbarkeit des Dämmstoffgewindes gegenüber dem Dübel erreichbar ist. Eine Ausgestaltung der Erfindung sieht vor, den Verkürzungsbereich als Stauchbereich auszubilden. Dadurch ist eine geschlossene Umhüllung beispielsweise der genannten Schraube möglich und keine Doppelwandigkeit im Verkürzungsbereich erforderlich, wie es bei einer Teleskopierbarkeit der Fall ist.

Das Dämmstoffgewinde weist bei einer Ausführungsform der Erfindung eine Werkzeugaufnahme zu einem durch Formschluss drehfesten Ansetzen eines Drehwerkzeugs auf, um das Dämmstoffgewinde in eine Dämmstoffplatte einschrauben zu können. Die Werkzeugaufnahme kann ein Außen- oder Innenmehrkant, ein Torx, ein Quer- oder Kreuzschlitz sein. Die Aufzählung ist nicht abschließend. Die Werkzeugaufnahme muss nicht unmittelbar am Dämmstoffgewinde, insbesondere am hinteren Stirnende seines Gewindekerns, ausgebildet sein, sondern kann auch an einem mit dem Dämmstoffgewinde drehfesten Element, beispielsweise einem Schraubenkopf der vorgenannten, mit dem Dämmstoffgewinde drehfesten Schraube ausgebildet sein.

Anstelle eines oder mehrerer durchgehender Gewindegänge, die erfindungsgemäß möglich sind, sieht eine Ausgestaltung der Erfindung Gewindesegmente vor, d.h. der Gewindegang oder die Gewindegänge des Dämmstoffgewindes bilden keine durchgehende Wendel, sondern erstrecken sich über einen oder mehrere, in Umfangsrichtung begrenzte Abschnitte. Die Erstreckung kann von einem Bruchteil einer Umdrehung bis zu mehreren Umdrehungen reichen. Es kann sich um eine oder mehrere unterbrochene Wendelflächen handeln oder die Wendelflächen sind vergleichbar den Blättern einer Schiffsschraube nur über begrenzte Umfangsabschnitte vorhanden. Die Gewindesegmente können einen gemeinsamen Gewindegang oder verschiedene Gewindegänge bilden. Gewindesegmente des Dämmstoffgewindes bieten Gestaltungsmöglichkeiten hinsichtlich einer Verkleinerung eines Einschraubmoments des Dämmstoffgewindes in die Dämmstoffplatte und/oder einer Erhöhung der Tragfähigkeit des Dämmstoffgewindes in der Dämmstoffplatte.

Denkbar ist auch, dass das Dämmstoffgewinde, wenn es nicht durchgehend, sondern in Form von Gewindesegmenten ausgebildet ist, keine Steigung aufweist. Der Vortrieb in der Dämmstoffplatte erfolgt in diesem Fall durch die Schraube beim Einschrauben in den Dübel, die das Dämmstoffgewinde bei fehlender Steigung in die Dämmstoffplatte einzieht. Ein steigungsloses Dämmstoffgewinde ist insbesondere möglich, wenn das Dämmstoffgewinde Gewindesegmente aufweist, die in Umfangsrichtung kurz sind, d.h. sich in Umfangsrichtung insbesondere über nicht mehr als 180°, vorzugsweise über 120°, 90° oder weniger erstrecken. Streng genommen kann bei fehlender Steigung nicht von einem Gewinde gesprochen werden. Trotzdem soll eine solche Ausgestaltung als Dämmstoffgewinde im Sinne der Erfindung aufgefasst werden. Das Einschrauben in die Dämmstoffplatte erfolgt bei steigungslosen Gewindesegmenten durch den Vortrieb der Schraube wendelförmig.

Um das Einschraubmoment zu verringern sieht eine Ausgestaltung der Erfindung vor, dass sich ein Außendurchmesser des Dämmstoffgewindes entgegen einer Einschraubrichtung vergrößert. Das Außengewinde kann über die gesamte Länge des Dämmstoffgewindes zunehmen oder auch nur an einem vorderen Ende des Dämmstoffgewindes im Bereich der ersten Windungen oder Windung. In gleicher Weise kann der Außendurchmesser der Gewindesegmente entgegen der Einschraubrichtung zunehmen, wenn das Dämmstoffgewinde Gewindesegmente aufweist. Dies hat bei einem schrägen Einbringen in den Dämmstoff den Vorteil, dass es zu weniger Ausbrüchen des Dämmstoffs kommt, als bei einem konstanten oder abnehmenden Außendurchmesser.

Eine Ausgestaltung der Erfindung sieht ausknickbare Rippen im Verkürzungsbereich des Dämmstoffhalters vor, die insbesondere in Längsrichtung des Dämmstoffhalters verlaufen. Die Rippen schneiden sich in die Dämmstoffplatte ein, wenn der Dämmstoffhalter in die Dämmstoffplatte eingebracht wird; sie verhindern ein Mitdrehen des Dübels des Dämmstoffhalters beim Einschrauben des Dämmstoffgewindes in die Dämmstoffplatte. Die Form der Rippen bestimmt sich anhand ihrer Funktionen, sich in die Dämmstoffplatte einzuschneiden und insbesondere den Dübel gegen Mitdrehen mit dem Dämmstoffgewinde in der Dämmstoffplatte zu sichern. Von geringerer Bedeutung ist, ob die Rippen tatsächlich eine Form aufweisen, die als ?Rippe" aufgefasst wird. Außerdem können die Rippen zur Abstützung des Verkürzungsbereichs dienen. Durch das Ausknicken ermöglichen die Rippen die Verkürzung des Dämmstoffhalters im Verkürzungsbereich.

Eine Weiterbildung sieht vor, dass die Rippen Schneiden an ihren vorderen Enden aufweisen, um sich in die Dämmstoffplatte einzuschneiden.

Eine Ausgestaltung der Erfindung sieht einen Tiefenanschlag für den Dübel vor, der beim Setzen des Dämmstoffhalters auf dem Befestigungsgrund aufsitzt und dadurch eine Setztiefe des Dübels im Befestigungsgrund begrenzt. Der Tiefenanschlag kann von den vorderen Enden der Rippen gebildet sein.

Die Erfindung wird nachfolgend anhand eines in der Zeichnung dargestellten Ausführungsbeispiels näher erläutert. Es zeigen:

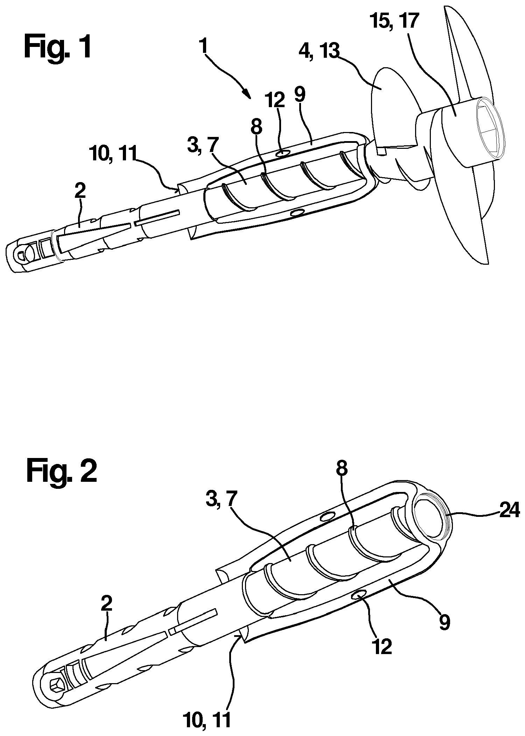

- Figur 1: einen erfindungsgemäßen Dämmstoffhalter in perspektivischer Darstellung;
- Figur 2: ein vorderes Teil des Dämmstoffhalters aus Figur 1 in perspektivischer Darstellung;

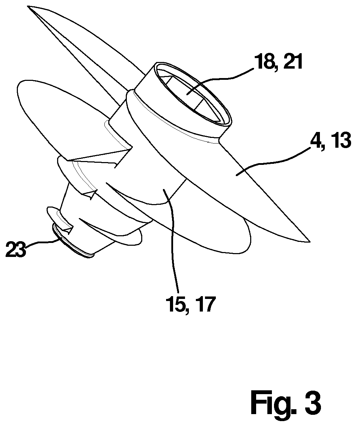

- Figur 3: ein Dämmstoffgewinde des Dämmstoffhalters aus Figur 1 in perspektivischer Darstellung;
- Figur 4: einen Achsschnitt des Dämmstoffhalters aus Figur 1 beim Setzen;
- Figur 5: eine Detailvergrößerung gemäß Ziffer V in Figur 4; und
- Figur 6: eine Seitenansicht des Dämmstoffhalters aus Figur 1 in gesetztem Zustand.

Der erfindungsgemäße Dämmstoffhalter 1 weist einen Dübel 2 mit einem Hohlschaft 3 an seinem hinteren Ende auf, der den Dübel 2 mit einem Dämmstoffgewinde 4 verbindet. Der Dämmstoffhalter 1 ist aus zwei Teilen zusammengesetzt, der Dübel 2 und der Hohlschaft 3 sind einstückig im Ausführungsbeispiel durch Spritzgießen hergestellt und drehbar mit dem Dämmstoffgewinde 4 verbunden, das separat beispielsweise ebenfalls durch Spritzgießen aus Kunststoff hergestellt ist.

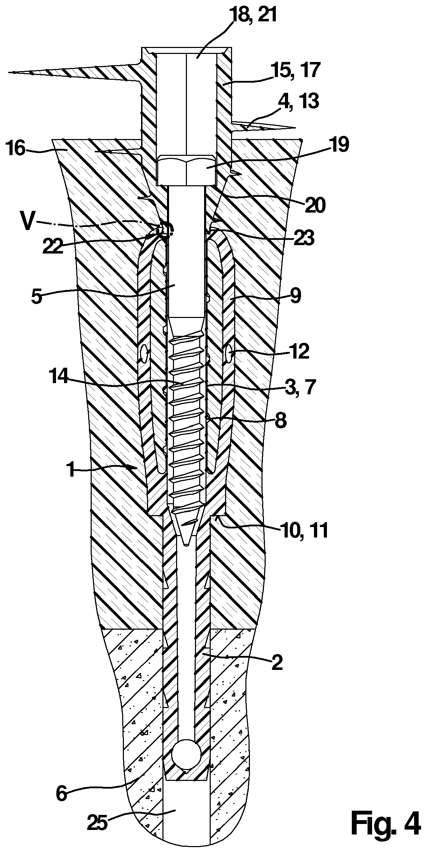

Der Dübel 2 ist an sich bekannter Bauart und lässt sich durch Einschrauben einer Schraube 5 (Figur 4) in an sich bekannter Weise aufspreizen, um den Dübel 2 und mit ihm den Dämmstoffhalter 1 in einem Befestigungsgrund 6 zu verankern.

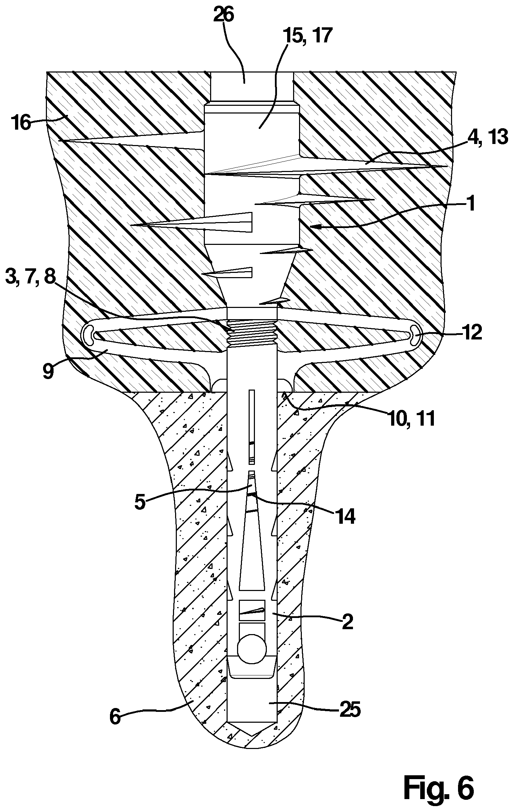

Der Hohlschaft 3 ist ein Verkürzungsbereich und dünnwandig als Stauchbereich 7 ausgebildet, er lässt sich stauchen, d.h. axial verkürzen, und wellt sich dabei wie in Figur 6 zu sehen. Zur Stabilisierung weist der Stauchbereich 7 einen wendelförmigen Wulst 8 auf seiner Außenseite auf.

In Längsrichtung über den als Stauchbereich 7 ausgebildeten Hohlschaft 3 hinweg erstrecken sich Rippen 9. Die Rippen 9 sind einander diametral gegenüberliegend in einer Axialebene des Dämmstoffhalters 1 angeordnet und gehen an ihren vorderen Enden einstückig in ein hinteres Ende des Dübels 2 und an ihren hinteren Enden in ein hinteres Ende des Hohlschafts 3 über. Im Stauchbereich 7 verlaufen die Rippen 9 außerhalb des Hohlschafts 3 ohne ihn zu berühren. Vordere Stirnränder der Rippen 9 sind als Schneiden 10 ausgebildet und bilden zugleich einen Tiefenanschlag 11, der eine Setztiefe des Dübels 2 in den Befestigungsgrund 6 begrenzt. Ungefähr in ihrer Längsmitte weisen die Rippen 9 Durchbrüche auf, die Ausknickhilfen 12 bilden, an denen die Rippen 9, wie in Figur 6 zu sehen, nach außen ausknicken können.

Das Dämmstoffgewinde 4 weist Gewindesegmente 13 auf, die einen wendelflächenförmigen Verlauf haben und sich in Umfangsrichtung zwischen etwa 90° bis 180° erstrecken. Eine Steigung der Gewindesegmente 13 ist so groß oder kleiner als eine Steigung eines Gewindes 14 der Schraube 5. Ein Außendurchmesser der Gewindesegmente 13 wird von vorn nach hinten größer, wobei mit ?vorn" dem Dübel 2 zugewandt und mit ?hinten" dem Dübel 2 fern gemeint ist. Die Gewindesegmente 13 sind dünn, sie können als bandförmig aufgefasst werden. Eine Dicke der Gewindesegmente 13 an einem Gewindefuß, also am Übergang zu einem Gewindekern 15, beträgt einen Bruchteil eines Durchmessers des Gewindekerns 15; das gilt jedenfalls für die hinteren Gewindesegmente 13. Das Dämmstoffgewinde 4 ist mehrgängig, d.h. die Gewindesegmente 13 befinden sich auf axial zueinander versetzten, gedachten Wendelflächen. Ein (größter) Außendurchmesser der Gewindesegmente 13 beträgt ein Mehrfaches des Durchmessers des Gewindekerns 15, das gilt jedenfalls für die hinteren Gewindesegmente 13. Auch eine Höhe der Gewindesegmente 13, d.h. ihre radiale Erstreckung vom Gewindefuß zum Gewindekopf, also die Differenz zwischen dem (größten) Außendurchmesser der Gewindesegmente 13 und dem Durchmesser des Gewindekerns 15, beträgt ein Mehrfaches des Durchmessers des Gewindekerns 15. Der (größte) Außendurchmesser des hintersten Gewindesegments 13 ist ungefähr viermal so groß wie der Durchmesser des Gewindekerns 15, die Höhe, also die radiale Erstreckung des hintersten Gewindesegments 13 ist ungefähr dreimal so groß wie ein Radius des Gewindekerns 15. Der Außendurchmesser der Gewindesegmente 13 nimmt entgegen einer Einschraubrichtung kontinuierlich bis zum größten Außendurchmesser zu. Das Dämmstoffgewinde 4 ist großflächig, wobei die Fläche des Dämmstoffgewindes 4 der Summe der Flächen der Gewindesegmente 13 entspricht. In axialer Projektion weist das Dämmstoffgewinde 4 eine große Fläche auf, die ein Vielfaches einer Querschnittsfläche des Gewindekerns 15 beträgt, wodurch das Dämmstoffgewinde 4 in einer geschäumten Dämmstoffplatte 16 eine hohe Tragfähigkeit aufweist.

Beginnend am hinteren Ende des Hohlschafts 3 vergrößert sich der Gewindekern 15 kegelstumpfförmig, bevor er in einen zylindrischen Abschnitt 17 übergeht. Der Gewindekern 15 ist hohl, er weist einen Innensechskant 18 auf, in dem ein Schraubenkopf 19 der Schraube 5 durch Formschluss drehfest aufgenommen ist. Der Innensechskant 18 verjüngt sich mit einer Ringstufe 20 auf einer Unterseite des Schraubenkopfs 19 zu einem zylindrischen Loch, das von einem Schaft der Schraube 5 durchgriffen wird. Die Ringstufe 20 bildet einen Axialanschlag für den Schraubenkopf 19. Der Innensechskant 18 bildet eine Werkzeugaufnahme 21 zu einem durch Formschluss drehfesten Ansetzen eines Drehwerkzeugs, beispielsweise eines Inbusschlüssels oder eines Sechskant-Bits.

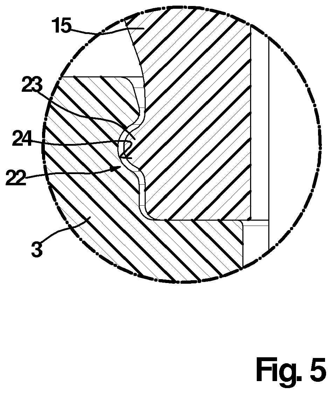

Das Dämmstoffgewinde 4 bzw. sein Gewindekern 15 ist durch eine Drehverbindung 22, die in Figur 5 in Vergrößerung dargestellt ist, drehbar mit dem Hohlschaft 3 und dem Dübel 2 verbunden. Die Drehverbindung 22 ist axial fest, eine Axialbewegung des Dämmstoffgewindes 4 in Bezug auf den Dübel 2 ist durch die Stauchbarkeit des als Stauchbereich 7 ausgebildeten Hohlschafts 3 gegeben. Die Drehverbindung 22 weist einen umlaufenden Wulst 23 auf einer Außenseite des Gewindekerns 15 und eine umlaufende, komplementäre Nut 24 auf einer Innenseite des Hohlschafts 3 auf. Der Wulst 23 liegt in der Nut 24 ein, Wulst 23 und Nut 24 bilden außer der Drehverbindung 22 eine Clipsverbindung, so dass das Dämmstoffgewinde 4 durch Einclipsen in das ihm zugewandte hintere Ende des Hohlschafts 3 drehbar mit dem Hohlschaft 3 und über diesen mit dem Dübel 2 verbunden ist. Der Wulst 23 befindet sich an einem vorderen, dem Hohlschaft 3 zugewandten, und die Nut 24 in einem hinteren, dem Gewindekern 15 des Dämmstoffgewindes 4 zugewandten Ende des Hohlschafts 3.

Zur Befestigung der beispielsweise aus Kunststoff geschäumten Dämmstoffplatte 16 an einem Befestigungsgrund 6, beispielsweise einer gemauerten oder betonierten Gebäudewand, wird durch die am Befestigungsgrund 6 anliegende Dämmstoffplatte 16 hindurch ein Loch 25 (Figuren 4 und 6) in den Befestigungsgrund 6 gebohrt. Anschließend wird der Dämmstoffhalter 1 mit dem Dübel 2 voraus in das Loch 25 eingebracht, bis das oder die vordersten Gewindesegmente 13 des Dämmstoffgewindes 4 in der Dämmstoffplatte 16 greifen. Beim Einbringen in die Dämmstoffplatte 16 schneiden sich die Rippen 9 in die Dämmstoffplatte 16 ein und sichern den Dübel 2 gegen Drehen, insbesondere gegen Mitdrehen mit dem Dämmstoffgewinde 4 beim nachfolgenden Einschrauben. Das Einschneiden der Rippen 9 in die Dämmstoffplatte 16 erleichtern die Schneiden 10 an den vorderen Stirnenden der Rippen 9. Unter gleichzeitigem axialen Druck wird das Dämmstoffgewinde 4 drehend angetrieben und schneidet sich in die Dämmstoffplatte 16 ein. Die Rippen 9 steifen den als Stauchbereich 7 ausgebildeten Hohlschaft 3 aus, solange bis sie mit ihren vorderen Stirnenden, die den Tiefenanschlag 11 bilden, auf dem Befestigungsgrund 6 aufsitzen. Bis dahin verhindern die Rippen 9, dass das Gewinde 14 der Schraube 5 in Eingriff mit dem Dübel 2 gelangt, der Dübel 2 wird also noch nicht aufgespreizt.

Wenn der Tiefenanschlag 11 auf dem Befestigungsgrund 6 aufsitzt, hat der Dübel 2 die vorgesehene Setztiefe erreicht. Durch weiteren Drehantrieb des Dämmstoffgewindes 4, mit dem die Schraube 5 drehfest ist, und fortgesetzte axiale Druckbeaufschlagung, gelangt das Gewinde 14 der Schraube 5 in Eingriff mit dem Dübel 2, es werden nach dem Aufsitzen des Tiefenanschlags 11 auf dem Befestigungsgrund 6 also das Dämmstoffgewinde 4 in die Dämmstoffplatte 16 und die Schraube 5 in den Dübel 2 eingeschraubt. Die Rippen 9 knicken an ihren Durchbrüchen, die die Ausknickhilfen 12 bilden, nach außen aus, so dass die Längssteifigkeit verloren geht und der Stauchbereich 7 gestaucht wird. Das Dämmstoffgewinde 4 nähert sich jetzt dem Dübel 2. Figur 6 zeigt den gesetzten Endzustand des Dämmstoffhalters 1 mit den ausgeknickten Rippen 9 und dem gestauchten Stauchbereich 7. Das Dämmstoffgewinde 4 einschließlich seines Gewindekerns 15 ist in der Dämmstoffplatte 16 versenkt, in der Dämmstoffplatte 16 verbleibt lediglich ein Loch 26, dessen Durchmesser nicht größer als der Durchmesser des Gewindekerns 15 ist. Zudem verbleiben in der Zeichnung nicht sichtbare Schlitze, an denen sich die Gewindesegmente 13 des Dämmstoffgewindes 4 in die Dämmstoffplatte 16 eingeschnitten haben. Die Dämmstoffplatte 16 ist am Befestigungsgrund 6 befestigt. Das Loch 26 in der Dämmstoffplatte 16 kann vor einem Verputzen mit einem wärmedämmenden Material verschlossen werden.

Ist die Steigung des Dämmstoffgewindes 4 kleiner als die Steigung des Gewindes 14 der Schraube 5, zieht die Schraube 5 beim Einschrauben in den Dübel 2 die Dämmstoffplatte 16 gegen den Befestigungsgrund 6, die Dämmstoffplatte 16 wird in diesem Fall gegen den Befestigungsgrund 6 gespannt, wodurch eine Hohllage vermieden wird.

## Patentansprüche

1. Dämmstoffhalter zur Befestigung einer Dämmstoffplatte (16) an einem Befestigungsgrund (6), mit einem Dämmstoffgewinde (4), das in die Dämmstoffplatte (16) einschraubbar ist, und mit einem Dübel (2), der in dem Befestigungsgrund (6) verankerbar ist, wobei das Dämmstoffgewinde (4) gegenüber dem Dübel (2) drehbar ist und wobei der Dämmstoffhalter (1) einen Verkürzungsbereich (7) zwischen dem Dämmstoffgewinde (4) und dem Dübel (2) aufweist, so dass ein Abstand zwischen dem Dämmstoffgewinde (4) und dem Dübel (2) verkleinert werden kann, **dadurch gekennzeichnet, dass** der Dämmstoffhalter (1) eine Drehverbindung (22) aufweist, die das Dämmstoffgewinde (4) axialfest und drehbar mit dem Dübel (2) verbindet.

2. Dämmstoffhalter nach Anspruch 1, **dadurch gekennzeichnet, dass** der Dämmstoffhalter (1) eine Schraube (5) aufweist, die drehfest mit dem Dämmstoffgewinde (4) ist und die bei einem Drehantrieb des Dämmstoffgewindes (4) in den Dübel (2) eingeschraubt wird.

3. Dämmstoffhalter nach Anspruch 2, **dadurch gekennzeichnet, dass** eine Steigung des Dämmstoffgewindes (4) nicht größer als eine Steigung eines Gewindes (14) der Schraube (5) ist.

4. Dämmstoffhalter nach Anspruch 1, **dadurch gekennzeichnet, dass** der Verkürzungsbereich als Stauchbereich (7) ausgebildet ist.

5. Dämmstoffhalter nach Anspruch 1, **dadurch gekennzeichnet, dass** das Dämmstoffgewinde (4) eine Werkzeugaufnahme (21) zu einem durch Formschluss drehfesten Ansetzen eines Drehwerkzeugs aufweist.

6. Dämmstoffhalter nach Anspruch 1, **dadurch gekennzeichnet, dass** das Dämmstoffgewinde (4) Gewindesegmente (13) aufweist.

7. Dämmstoffhalter nach Anspruch 1, **dadurch gekennzeichnet, dass** ein Außendurchmesser des Dämmstoffgewindes (4) entgegen einer Einschraubrichtung zunimmt.

8. Dämmstoffhalter nach Anspruch 1, **dadurch gekennzeichnet, dass** der Dämmstoffhalter (1) ausknickbare Rippen (9) im Verkürzungsbereich aufweist, die sich in die Dämmstoffplatte (16) einschneiden und den Dübel (2) gegen Mitdrehen mit dem Dämmstoffgewinde (4) sichern.

9. Dämmstoffhalter nach Anspruch 8, **dadurch gekennzeichnet, dass** die Rippen (9) Schneiden (10) an ihren vorderen Enden aufweisen.

10. Dämmstoffhalter nach Anspruch 1, **dadurch gekennzeichnet, dass** der Dämmstoffhalter (1) einen Tiefenanschlag (11) für den Dübel (2) aufweist, der beim Setzen des Dämmstoffhalters (1) auf dem Befestigungsgrund (6) aufsitzt und eine Setztiefe des Dübels (2) im Befestigungsgrund (6) begrenzt.

## Claims

1. Insulation holder for fixing an insulation panel (16) to a fixing substrate (6), having an insulation thread (4), which is arranged to be screwed into the insulation panel (16), and having a fixing plug (2), which is arranged to be anchored in the fixing substrate (6), wherein the insulation thread (4) is able to rotate relative to the fixing plug (2) and wherein the insulation holder (1) has a contraction region (7) between the insulation thread (4) and the fixing plug (2), so that a spacing between the insulation thread (4) and the fixing plug (2) can be made smaller, **characterised in that** the insulation holder (1) has a rotary connection (22) which connects the insulation thread (4) in axially fixed and rotatable manner to the fixing plug (2).

2. Insulation holder according to claim 1, **characterised in that** the insulation holder (1) has a screw (5) which is fixed for rotation with the insulation thread (4) and which is screwed into the fixing plug (2) when the insulation thread (4) is driven in rotation.

3. Insulation holder according to claim 2, **characterised in that** a pitch of the insulation thread (4) is not greater than a pitch of a thread (14) of the screw (5).

4. Insulation holder according to claim 1, **characterised in that** the contraction region is in the form of a compression region (7).

5. Insulation holder according to claim 1, **characterised in that** the insulation thread (4) has a tool receiver (21) for application of a rotary tool so as to be interlockingly fixed for rotation therewith.

6. Insulation holder according to claim 1, **characterised in that** the insulation thread (4) has thread segments (13).

7. Insulation holder according to claim 1, **characterised in that** an external diameter of the insulation thread (4) increases in a direction opposite to a screwing-in direction.

8. Insulation holder according to claim 1, **characterised in that** the insulation holder (1) has, in the contraction region, bucklable ribs (9) which cut into the insulation panel (16) and secure the fixing plug (2) against conjoint rotation with the insulation thread (4).

9. Insulation holder according to claim 8, **characterised in that** the ribs (9) have cutting edges (10) on their front ends.

10. Insulation holder according to claim 1, **characterised in that** the insulation holder(1) has a depth stop (11) for the fixing plug (2), which depth stop, on setting of the insulation holder (1), is seated on the fixing substrate (6) and limits a setting depth of the fixing plug (2) in the fixing substrate (6).

## Revendications

1. Support de matériaux isolants conçu pour fixer un panneau isolant (16) à un fond de fixation (6), comprenant un filetage (4) pour matériaux isolants qui peut être vissé dans ledit panneau isolant (16), et une cheville (2) pouvant être ancrée dans ledit fond de fixation (6), sachant que ledit filetage (4) pour matériaux isolants peut tourner par rapport à ladite cheville (2), et sachant que ledit support (1) de matériaux isolants est muni d'une zone de raccourcissement (7), entre le filetage (4) pour matériaux isolants et la cheville (2), de marnière à pouvoir diminuer un espacement entre ledit filetage (4) pour matériaux isolants et ladite cheville (2), **caractérisé par le fait que** le support (1) de matériaux isolants présente une liaison tournante (22) qui relie le filetage (4) pour matériaux isolants à la cheville (2), avec arrêt axial et faculté de rotation.

2. Support de matériaux isolants, selon la revendication 1, **caractérisé par le fait que** ledit support (1) de matériaux isolants présente une vis (5) verrouillée en rotation avec le filetage (4) pour matériaux isolants, qui est vissée dans la cheville (2) lorsque ledit filetage (4) pour matériaux isolants est entraîné en rotation.

3. Support de matériaux isolants, selon la revendication 2, **caractérisé par le fait qu'**un pas du filetage (4) pour matériaux isolants n'est pas supérieur à un pas d'un filetage (14) de la vis (5).

4. Support de matériaux isolants, selon la revendication 1, **caractérisé par le fait que** la zone de raccourcissement est réalisée en tant que zone de contraction (7).

5. Support de matériaux isolants, selon la revendication 1, **caractérisé par le fait que** le filetage (4) pour matériaux isolants comporte un logement d'outillage (21) dévolu à l'engagement d'un outil rotatif, instauré avec verrouillage en rotation par complémentarité de formes.

6. Support de matériaux isolants, selon la revendication 1, **caractérisé par le fait que** le filetage (4) pour matériaux isolants comporte des segments filetés (13).

7. Support de matériaux isolants, selon la revendication 1, **caractérisé par le fait qu'**un diamètre extérieur du filetage (4) pour matériaux isolants croît en sens inverse d'une direction de vissage.

8. Support de matériaux isolants, selon la revendication 1, **caractérisé par le fait que** ledit support (1) de matériaux isolants est muni, dans la zone de raccourcissement, de nervures (9) aptes au fléchissement, qui s'enfoncent dans le panneau isolant (16) et empêchent la cheville (2) de tourner conjointement au filetage (4) pour matériaux isolants.

9. Support de matériaux isolants, selon la revendication 8, **caractérisé par le fait que** les nervures (9) sont pourvues de tranchants (10) à leurs extrémités antérieures.

10. Support de matériaux isolants, selon la revendication 1, **caractérisé par le fait que** ledit support (1) de matériaux isolants est doté d'une butée de profondeur (11) dédiée à la cheville (2), qui repose sur le fond de fixation (6) lors de la mise en place dudit support (1) de matériaux isolants et limite une profondeur d'assise de ladite cheville (2) dans ledit fond de fixation (6).
